# EUROPEAN PATENT APPLICATION

(11) **EP 4 280 676 A1**
(43) Date of publication of application: **22.11.2023**
(21) Application number: 22752284.4
(22) Date of filing: 09.02.2022
(51) Int. Cl.: H04W 28/10

(54) **TRANSMISSION PATH DETERMINATION METHOD AND APPARATUS**

(30) Priority: 10.02.2021 CN 202110185300
(71) Applicant: Huawei Technologies Co., Ltd., Shenzhen, Guangdong 518129 (CN)
(72) Inventor: XU, Yishan, Shenzhen, Guangdong 518129 (CN); ZHU, Hualin, Shenzhen, Guangdong 518129 (CN)
(74) Representative: MERH-IP Matias Erny Reichl Hoffmann Patentanwälte PartG mbB
(86) International application number: PCT/CN2022/075653
(87) International publication number: WO 2022/171124

(57) **Abstract**

This application provides a transmission path determining method and an apparatus. The method includes: obtaining steering information, where the steering information includes a threshold condition and an application rule corresponding to the threshold condition; and determining a target transmission path from at least two transmission paths based on the steering information, where the at least two transmission paths include a first transmission path using a first access technology and a second transmission path using a second access technology.

## Description

### CROSS-REFERENCE TO RELATED APPLICATIONS

This application claims priority to Chinese Patent Application No. 202110185300.1, filed with the China National Intellectual Property Administration on February 10, 2021 and entitled "TRANSMISSION PATH DETERMINING METHOD AND APPARATUS", which is incorporated herein by reference in its entirety.

### TECHNICAL FIELD

This application relates to the field of communication technologies, and in particular, to a transmission path determining method and an apparatus.

### BACKGROUND

In the 3rd generation partnership project (the 3rd generation partnership project, 3GPP) release 16 (release 16, R16), both a terminal device and a user plane function (User Plane Function, UPF) network element support an access traffic steering, switching, and splitting (access traffic steering, switching, and splitting, ATSSS) feature, that is, may transmit, through a 3GPP access technology and a non-3GPP (Non-3GPP) access technology, service flow data that needs to be sent.

A current release defines a plurality of steering modes (steering mode). During service flow sending, data may be transmitted through a configured steering mode.

However, an existing data transmission method is not flexible enough, and cannot meet a requirement of service flow data transmission.

### SUMMARY

This application provides a transmission path determining method and an apparatus, to improve flexibility of service flow data transmission.

According to a first aspect, this application provides a transmission path determining method. The method includes: obtaining steering information, where the steering information includes a threshold condition and an application rule corresponding to the threshold condition; and determining a target transmission path from at least two transmission paths based on the steering information, where the at least two transmission paths include a first transmission path using a first access technology and a second transmission path using a second access technology.

According to the foregoing method, the target transmission path may be determined based on the steering information, and the transmission path may be dynamically adjusted based on a link status to perform data transmission, thereby improving data transmission flexibility.

In a possible implementation, when the target transmission path includes available transmission paths, the transmission path for data transmission may be determined from the available transmission paths based on a steering mode.

In a possible implementation, the available transmission paths included in the target transmission path are the first transmission path and the second transmission path. When the steering mode is a load-balancing mode, both the first transmission path and the second transmission path may be determined as the transmission path for data transmission. During data transmission, a steering proportion of the first transmission path and a steering proportion of the second transmission path are steering proportions configured in the load-balancing mode.

When the steering mode is an active-standby mode, if an active path is the first transmission path, the active path, that is, the first transmission path, may be determined as the transmission path for data transmission.

When the steering mode is a smallest delay mode, a terminal device or a user plane network element monitors a round-trip delay of each transmission path in real time, and determines one of the first transmission path and the second transmission path with a shortest round-trip delay as the transmission path for data transmission.

When the steering mode is a priority-based mode, assuming that a path priority of the first transmission path is higher than a path priority of the second transmission path, the first transmission path is determined as the transmission path for data transmission. When the transmission path with a higher path priority has no congestion, all service flow data is transmitted through the transmission path with a higher path priority (that is, the first transmission path). When congestion occurs on the transmission path with a higher path priority, partial service flow data is transmitted through a transmission path with a lower path priority (that is, the second transmission path).

In a possible implementation, the application rule includes: attribute information corresponding to the threshold condition, where the attribute information includes a mandatory condition or an optional condition, and the attribute information indicates that the threshold condition is a mandatory condition or an optional condition.

In a possible implementation, if the attribute information is an optional condition, the determining a target transmission path from at least two transmission paths based on the steering information includes: determining that the first transmission path does not meet the threshold condition and that the second transmission path meets the threshold condition; and reducing a steering proportion of data in the first transmission path, and increasing a steering proportion of data in the second transmission path.

In a possible implementation, if the attribute information is a mandatory condition, the determining a target transmission path from at least two transmission paths based on the steering information includes: determining that the first transmission path does not meet the threshold condition and that the second transmission path meets the threshold condition; and determining the second transmission path as the target transmission path.

Through the attribute information, different steering modes may be performed when the path does not meet the threshold conditions of different attribute information. For example, when some service flows are sensitive to a packet loss rate, attribute information of a threshold condition related to the packet loss rate is configured as a mandatory condition. In this way, when the path does not meet the threshold condition related to the packet loss rate, the service flow may be transmitted through another path that meets the threshold condition related to the packet loss rate. Similarly, if some service flows are insensitive to some threshold conditions, for example, insensitive to a round-trip delay, attribute information of the threshold conditions may be configured as an optional condition. When the path does not meet the threshold condition, it is not necessary to switch all service flows originally to be transmitted on the path to another path that meets the threshold condition for transmission. Instead, only the service flows to be transmitted on the path need to be reduced.

In a possible implementation, the application rule includes priority information corresponding to the threshold condition, and the priority information indicates a priority of the threshold condition.

In a possible implementation, the target transmission path includes the first transmission path. A priority of a threshold condition met by the first transmission path is higher than a priority of a threshold condition met by the second transmission path.

The priority is configured for the threshold condition, so that when a plurality of threshold conditions are applied to a steering mode, a transmission path for transmitting data and/or a steering proportion of a transmission path may be determined based on the priorities of the threshold conditions, thereby avoiding a failure to determine steering of service flow data through a unified rule when a transmission path meets only partial threshold conditions.

In a possible implementation, the application rule includes level information corresponding to the threshold condition.

In a possible implementation, the threshold condition includes a first threshold condition and a second threshold condition, and the application rule includes a first level corresponding to the first threshold condition and a second level corresponding to the second threshold condition; and the determining a target transmission path from at least two transmission paths based on the steering information includes: determining that the first transmission path meets the first threshold condition, and determining that the second transmission path meets the second threshold condition; and determining the steering proportion of the first transmission path and the steering proportion of the second transmission path based on the first level and the second level.

Through classification based on the threshold condition, in a status change process of a path, the path status may be classified into different levels, and the service flow data steering proportion may be determined based on a current level of the path. An advantage of this is that more refined steering can be achieved, that is, the steering proportion is not changed based on a single threshold condition, and different levels of steering proportions may be achieved. In this way, when the path has different states, the steering proportion may be dynamically modified, so as to adapt to a network status more effectively.

In a possible implementation, the threshold condition includes a plurality of threshold conditions, and the application rule includes determining the target transmission path based on a quantity of the plurality of threshold conditions met by the first transmission path and the second transmission path.

In a possible implementation, the determining a target transmission path from at least two transmission paths based on the steering information includes: determining that neither of the first transmission path and the second transmission path meets the threshold condition; and determining a default transmission path as the target transmission path, where the default transmission path is at least one of the first transmission path and the second transmission path.

The default path is configured, so that when no transmission path meets the threshold condition, data may be transmitted through the default path, which avoids a failure to determine how to perform steered data transmission.

In a possible implementation, the application rule corresponding to the threshold condition includes: when neither of the first transmission path and the second transmission path meets the threshold condition, determining the default transmission path as the target transmission path.

In a possible implementation, the default path is sent by a core network element, or the default path is configured by a terminal device or a user plane network element.

In a possible implementation, the steering information is located in an access traffic steering, switching, and splitting ATSSS rule. Alternatively, the steering information is located in an N4 rule.

In a possible implementation, the obtaining steering information includes: obtaining an access traffic steering, switching, and splitting ATSSS rule, where the ATSSS rule includes the steering information; or obtaining an N4 rule, where the N4 rule includes the steering information.

In a possible implementation, the obtaining steering information includes: obtaining steering information from a core network element.

In a possible implementation, the first access technology is a third generation partner program 3GPP access technology, and the second access technology is a non-3GPP access technology or a wired access technology. Alternatively, the first access technology is a non-3GPP access technology or a wired access technology, and the second access technology is a 3GPP access technology.

According to a second aspect, this application provides a transmission path determining method. The method includes: obtaining steering information, where the steering information includes a threshold condition and an application rule corresponding to the threshold condition; determining, based on the steering information, that at least two transmission paths do not meet the threshold condition; and determining a default transmission path as a target transmission path or skipping performing data transmission, where the default transmission path is at least one of a first transmission path and a second transmission path; and the at least two transmission paths include a first transmission path using a first access technology and a second transmission path using a second access technology.

According to a third aspect, this application further provides a communication apparatus, and the communication apparatus implements any method provided in the first aspect or the second aspect. The communication apparatus may be implemented by hardware, or may be implemented by hardware executing corresponding software. The hardware or software includes one or more units or modules corresponding to the foregoing functions.

In a possible implementation, the communication apparatus includes a processor, where the processor is configured to support the communication apparatus to perform a corresponding function of the terminal device or a network device in the foregoing method. The communication apparatus may further include a memory. The memory may be coupled to the processor, and the memory stores program instructions and data that are necessary for the communication apparatus. In a possible implementation, the communication apparatus further includes an interface circuit, and the interface circuit is configured to support communication of the communication apparatus.

In a possible implementation, the communication apparatus includes corresponding function modules configured to implement the steps in the foregoing method. The functions may be implemented by hardware, or may be implemented by hardware executing corresponding software. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in the first aspect or the second aspect. The details are not described herein.

The apparatus may be a base station, a gNB, a user plane network element, a forwarding plane device, a UPF, or the like. The communication unit may be a transceiver or an interface circuit. Optionally, the transceiver may alternatively be an input/output circuit or an interface.

The apparatus may be an intelligent terminal, a wearable device, or the like, and the communication unit may be a transceiver or an interface circuit. Optionally, the transceiver may alternatively be an input/output circuit or an interface.

According to a fourth aspect, a communication apparatus is provided. The communication apparatus includes a processor and a memory, where the memory is configured to store a computer program; and the processor is configured to execute the computer program stored in the memory, so that the communication apparatus performs the method in any possible implementation of the first aspect.

According to a fifth aspect, a computer-readable storage medium is provided. The computer-readable storage medium stores a computer program or instructions. When executing the computer program or the instructions, a processor in a computer implements the method in any possible implementation of the first aspect.

According to a sixth aspect, a computer program product is provided. The computer program product includes computer-readable instructions. When a communication apparatus reads and executes the computer-readable instructions, the communication apparatus performs the method in any possible implementation of the first aspect.

According to a seventh aspect, a chip system is provided. The chip system includes a processor, and may further include a memory. The chip system is configured to implement the method in any possible implementation of the first aspect. The chip system may include a chip, or may include a chip and another discrete device.

According to an eighth aspect, a communication system is provided. The communication system includes: a user plane network element, configured to perform the method in any possible implementation of the first aspect; and
a control plane network element, configured to send steering information to the user plane network element, where the steering information includes a threshold condition and an application rule corresponding to the threshold condition.

According to a ninth aspect, a communication system is provided, where a control plane network element sends steering information to a user plane network element, where the steering information includes a threshold condition and an application rule corresponding to the threshold condition; and the user plane network element determines a target transmission path from at least two transmission paths based on the steering information, where the at least two transmission paths include a first transmission path using a first access technology and a second transmission path using a second access technology.

According to a tenth aspect, a communication system is provided. The communication system includes: a terminal device, configured to perform the method in any possible implementation of the first aspect; and
a control plane network element, configured to send steering information to the terminal device, where the steering information includes a threshold condition and an application rule corresponding to the threshold condition.

According to an eleventh aspect, a communication system is provided. The communication system includes: sending, by a control plane network element, steering information to a terminal device, where the steering information includes a threshold condition and an application rule corresponding to the threshold condition; and determining, by the terminal device, a target transmission path from at least two transmission paths based on the steering information, where the at least two transmission paths include a first transmission path using a first access technology and a second transmission path using a second access technology.

It should be noted that in this application, the control plane network element may be a policy control function network element, or may be another network element that can implement a function of the policy control function network element, for example, may be a network element obtained by integrally forming the policy control function network element and a session management function network element.

### BRIEF DESCRIPTION OF DRAWINGS

FIG. 1 is a schematic diagram of a communication system applicable to embodiments of this application;
FIG. 2 is a schematic flowchart of a transmission path determining method according to an embodiment of this application;
FIG. 3 is a schematic diagram of a session establishment process according to an embodiment of this application;
FIG. 4 is a schematic structural diagram of a communication apparatus according to an embodiment of this application; and
FIG. 5 is a schematic structural diagram of a communication apparatus according to an embodiment of this application.

### DESCRIPTION OF EMBODIMENTS

The following describes in detail embodiments of this application with reference to the accompanying drawings of the specification.

Embodiments of this application may be applied to various mobile communication systems, for example, a long term evolution (long term evolution, LTE) system, an LTE frequency division duplex (Frequency Division Duplex, FDD) system, an LTE time division duplex (Time Division Duplex, TDD), a worldwide interoperability for microwave access (Worldwide Interoperability for Microwave Access, WiMAX) communication system, a 5th generation (5th Generation, 5G) system, future 5.5th generation (5.5th generation, 5.5G), 6th generation (6th generation, 6G), or new radio (New Radio, NR).

The network architecture and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

In the following description, an example in which the solutions provided in embodiments of this application are applied to a 5G system is used for description. It should be noted that the solutions in embodiments of this application may be further applied to another wireless communications network. The corresponding name may be replaced with a name of a corresponding function in the another wireless communications network. Details are not described herein.

In embodiments of this application, a terminal device is a device with a wireless transceiver function or a chip that may be disposed in the device. The device with a wireless transceiver function may also be referred to as user equipment (user equipment, UE), an access terminal, a user unit, a user station, a mobile device, or a user terminal. In actual application, the terminal device in embodiments of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self-driving, or the like. An application scenario is not limited in embodiments of this application. In this application, the foregoing device with a wireless transceiver function and chip that may be disposed in the device are collectively referred to as a terminal device.

In embodiments of this application, the access network device may be a radio access device in various standards, for example, may be a next generation NodeB (next Generation NodeB, gNB) in an NR system, or may be an evolved NodeB (evolved NodeB, eNB).

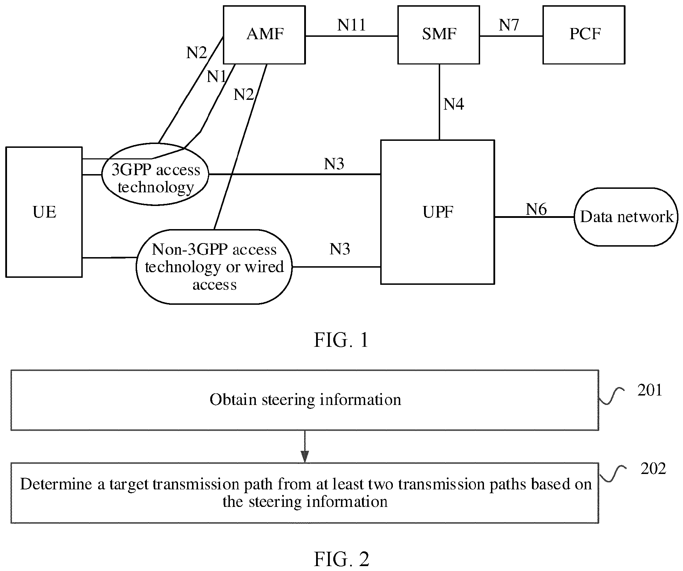

For ease of understanding of embodiments of this application, a communication system applicable to embodiments of this application is first described in detail by using a communication system shown in FIG. 1 as an example. FIG. 1 is a schematic diagram of a communication system applicable to embodiments of this application.

The network architecture shown in FIG. 1 may support an ATSSS technology. In other words, a terminal device and a UPF device may support transmission of service flow data through a plurality of access technologies such as a 3GPP access technology, a non-3GPP access technology, or a wired access technology. In this embodiment of this application, the 3GPP access technology includes but is not limited to NR, an evolved UMTS terrestrial radio access network (UMTS Terrestrial Radio Access Network, E-UTRAN), MulteFire, a 4G cellular access technology, and a 5G cellular access technology. A non-3GPP access technology or a wired access technology includes but is not limited to a trusted or untrusted Wi-Fi access technology, a fixed network or wired access technology, an institute of electrical and electronics engineers (institute of electrical and electronics engineers, IEEE) 802.11 series radio access technology, and an IEEE 802.3 Ethernet access technology. FIG. 1 includes network elements such as a terminal device, a UPF network element, an access and mobility management function (access and mobility management function, AMF) network element, a session management function (session management function, SMF) network element, and a policy control function (policy control function, PCF) network element.

FIG. 1 may further include a data network (data network, DN), and the DN may provide a data service for the terminal device. For a specific function of each network element in FIG. 1, refer to descriptions in the conventional technology, and the details are not described herein. It should be noted that FIG. 1 is merely an example. The network architecture may further include another network element. Examples are not described enumerated herein. For description, in this embodiment of this application, the UPF network element is referred to as a UPF, the SMF network element is referred to as an SMF, and the PCF network element is referred to as a PCF. Another network element is similar. Examples are not described enumerated herein.

In this embodiment of this application, when the terminal device and the UPF network element support the ATSSS technology, a plurality of steering modes can be used for data transmission. Specifically, the following four steering modes may be included: an active-standby (Active-Standby) mode, a smallest delay (Smallest Delay) mode, a load-balancing (Load-Balancing) mode, and a priority-based (Priority-based) mode. The following describes a mechanism of each steering mode.
1.Active-standby mode: in which one of a transmission path using the 3GPP access technology and a transmission path using the non-3GPP access technology is designated as an active path, and the other transmission path is designated as a standby path. When the active path is available, all service flow data is transmitted to a peer end through the active path. When the active path is unavailable, all service flow data is switched to the standby path for transmission.
2. Smallest delay mode: in which a transmission path with a shortest round-trip delay is selected to transmit service flow data. In this mode, the terminal device or the UPF monitors a round-trip delay of each transmission path in real time, to select a transmission path with a shortest round-trip delay for transmission.
3.Load-balancing mode: in which service flow data is assigned to different transmission paths in proportion. The assignment proportion is determined based on loads of the two transmission paths in the network (For example, a path with a heavy load is assigned with a smaller proportion, and a path with a light load is assigned with a larger proportion). Currently, the proportion is assigned by the network and is fixed (that is, the proportion does not change with a change of the network load). For example, a steering proportion of the transmission path using the 3GPP access technology is 80%, and a steering proportion of the transmission path using the non-3GPP access technology is 20%.
4.Priority-based mode: In this mode, one of a transmission path using the 3GPP access technology and a transmission path using the non-3GPP access technology is designated as a transmission path with a high priority, and the other transmission path is designated as a transmission path with a low priority. When the transmission path with a high priority has no congestion, all service flow data is transmitted through the transmission path with a high priority. When congestion occurs on the transmission path with a high priority, partial service flow data is transmitted through the transmission path with a low priority. When the transmission path with a high priority is unavailable, all service flow data is transmitted through the transmission path with a low priority.

The foregoing four steering modes are applicable to few scenarios, are not flexible enough, and cannot meet a transmission requirement of service flow data. This application provides a method applicable to a plurality of scenarios, to implement flexible data transmission and improve data transmission efficiency.

This embodiment of this application provides a method. A core network element may send steering information to a terminal device and a user plane network element. The terminal device and the user plane network element determine, based on the steering information, a transmission path for data transmission, so as to determine a proper transmission path in a multipath condition. The solution provided in this application may also be used in combination with a steering mode, so as to improve application scope of the existing steering mode and improve data transmission flexibility. Details are described below.

FIG. 2 is a schematic flowchart of a transmission path determining method according to an embodiment of this application. The process shown in FIG. 2 may be applied to the network architecture shown in FIG. 1. The method may be performed by a terminal device, an access network element (for example, a base station), or a user plane network element, or may be performed by a chip or a module inside the terminal device, or may be performed by a chip or a module inside the user plane network element.

S201: Obtain steering information.

In this embodiment of this application, the steering information includes a threshold condition and an application rule corresponding to the threshold condition.

The steering information can be used for determining a transmission path for data transmission, and/or can be used for determining a transmission path not for data transmission. Specific content of the steering information is described in detail below, and the details are not described herein.

S202: Determine a target transmission path from at least two transmission paths based on the steering information.

The at least two transmission paths include a first transmission path using a first access technology and a second transmission path using a second access technology. For example, the first access technology may be a 3GPP access technology, and the second access technology may be a non-3GPP access technology or a wired access technology. Alternatively, the first access technology may be a non-3GPP access technology or a wired access technology, and the second access technology may be a 3GPP access technology. For ease of description, in the following, a transmission path using the 3GPP access technology is referred to as a 3GPP path for short, and a transmission path using the non-3GPP access technology or the wired access technology is referred to as a non-3GPP path for short.

In this embodiment of this application, the target transmission path may include a transmission path on which data can be transmitted and/or a transmission path on which data cannot be transmitted. This is specifically determined based on an actual situation. For ease of description, in this embodiment of this application, the transmission path on which data can be transmitted is referred to as a first-type transmission path, and the transmission path on which data cannot be transmitted is referred to as a second-type transmission path.

In a possible implementation, a steering proportion of the transmission path in the target transmission path on which data can be transmitted may be determined based on the steering information. Details are described below. It should be noted that the steering proportion ranges from 0 to 100%. If the transmission path on which data can be transmitted includes the first transmission path and the second transmission path, the steering proportion of the first transmission path is 0, and the steering proportion of the second transmission path is 100%. In this case, the data may not be transmitted through the first transmission path, and is transmitted through only the second transmission path.

To clearly describe the solutions provided in this embodiment of this application, a process of obtaining the steering information and a process of determining the transmission path based on the steering information are described in this embodiment of this application. The two processes may run independently, or may run in combination. This is not limited in this embodiment of this application.

In this embodiment of this application, the steering information may originate from a core network element. Specifically, the steering information may be sent or configured by the core network element during session establishment. Certainly, the steering information may be obtained in another manner. This is not limited in this embodiment of this application.

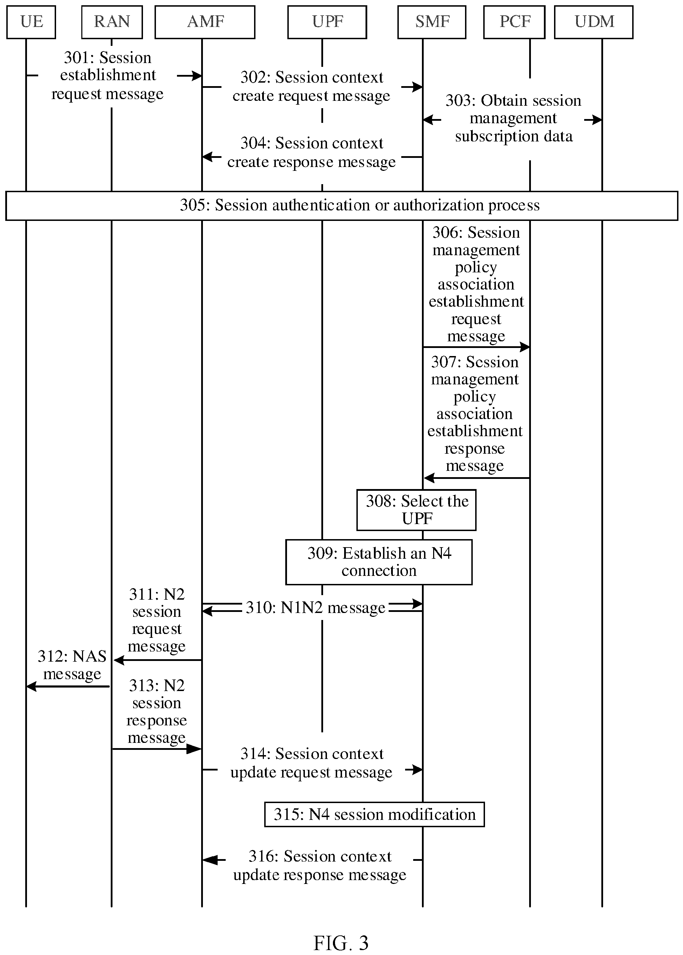

FIG. 3 is a schematic diagram of a session establishment process according to an embodiment of this application. In FIG. 3, an example in which a terminal device is UE, a user plane network element is a UPF, and a core network element is a PCF is used to describe how the LTE and the UPF obtain steering information from the PCF. Details are described below. It should be noted that in the process shown in FIG. 3, a name of each message is merely an example. The name of each message may vary in actual application, but may represent a same message as long as functions are the same or similar.

S301: The LTE sends a session establishment request message to an AMF.

A name of the session establishment request message is not limited. In a possible implementation, the UE sends a protocol data unit (protocol data unit, PDU) session establishment request (session establishment request) message to the AMF.

The session establishment request message is a non-access stratum (non-access stratum, NAS) message, and carries parameters such as a session identifier (session ID), a request type (request type), a data network name (UE Requested data network name, UE Requested DNN) requested by the user equipment, and single network slice selection assistance information (single network slice selection assistance information, S-NSSAI). The request type is a multi-access (multi-access, MA) request, indicating that the session establishment request message is used for requesting to establish a multi-access session.

S302: The AMF sends a create session context request message to an SMF.

The message carries parameters such as a subscription permanent identifier (subscription permanent identifier, SUPI), a DNN requested by the user equipment, a session identifier, and an MA request. The SUPI is a UE identifier, and the request type is the MA request.

In a possible implementation, S303 is performed. S303: The SMF obtains session management subscription data from unified data management (unified data management, UDM).

The subscription data may include information about whether to allow establishment of the multi-access session (MA session).

S304: The SMF feeds back a session context create response message to the AMF.

In a possible implementation, S305 is performed. S305: Perform a session authentication or authorization process.

It should be noted that a specific process of the step is not limited in this embodiment of this application. For details, refer to descriptions in the conventional technology. The details are not described herein.

S306: The SMF sends a session management (session management, SM) policy association establishment request (policy association establishment request) message to the PCF, to establish a session policy association.

Specifically, if a dynamic policy control and charging (policy control and charging, PCC) rule is required, the SMF selects the PCF, and sends the session management policy association establishment request message to the selected PCF. The message may include parameters such as a multi-access session request.

S307: The PCF sends a session management policy association establishment response (policy association establishment response) message to the SMF.

The session management policy association establishment response message includes the policy rule. In a possible implementation, the session management policy association establishment response message includes the PCC rule, and the PCC rule may include multi-access session control information (MA session control information). The multi-access session control information includes a steering mode (steering mode) and the steering information.

In a possible implementation, the multi-access session control information may further include a default (default) path. The default path may be a part of the steering information, or may exist independently of the steering information. The default path may be a first transmission path, a second transmission path, or empty. If the default path is empty, it indicates that there is no default path or no default path is configured.

In a possible implementation, the steering mode may be a part of the steering information, or may exist independently of the steering information.

S308: The SMF selects a proper UPF.

Specific selection is not limited in this embodiment of this application, and the details are not described herein.

S309: The SMF establishes an N4 connection to the UPF.

In a possible implementation, the SMF obtains the steering mode and the steering information based on the PCC rule received in S307. Specifically, the SMF sends an N4 message to the UPF. The N4 message includes information such as the steering mode and the steering information.

In another possible implementation, the SMF sends an N4 session establishment request message to the UPF. The message includes an N4 rule, and the N4 rule includes a packet detection rule (packet detection rule, PDR), a forwarding action rule (forwarding action rule, FAR), a multi-access rule (multi-access rule, MAR), and the like. The MAR rule includes information such as the steering mode and the steering information. The N4 interface is an interface between the SMF and the UPF. The N4 rule can be used for notifying the UPF network element of a steering function that should be used for service flow data and how to select a transmission path to transmit the service flow data.

In a possible implementation, the N4 message further includes a default path, or the MAR rule further includes a default path.

S310: The SMF sends an N1N2 message to the AMF.

In a possible implementation, the N1N2 message includes one or more of information such as a session identifier, N2 session management information (N2 SM information), and an N1 session management container (N1 SM container). The N2 SM information is sent by the SMF to a radio access network (radio access network, RAN) by using the AMF, and the information in the N1 SM container is sent by the SMF to the UE through the AMF (subsequently sent by the AMF to the UE through a NAS message).

The N1N2 message includes information such as the steering mode and the steering information. In a possible implementation, the N2 SM information includes information such as a tunnel endpoint identifier of the UPF. The N1 SM container includes one or more of session-related parameter information such as a session establishment accept (session establishment accept) message and an ATSSS rule (rule). The ATSSS rule includes parameters such as the steering mode and the steering information. The ATSSS rule can be used for indicating information (such as a 5-tuple or a source/destination MAC address) for identifying a service flow by the terminal device. The steering function and the steering mode are used for notifying the terminal device of a steering function that should be used for the service flow data and how to select a transmission path to transmit the service flow data.

In a possible implementation, the N1N2 message further includes a default path, or the ATSSS rule further includes a default path.

S311: The AMF sends an N2 session request message to a RAN.

For example, in a possible implementation, if a PDU session is to be established, the N2 session request message may be an N2 PDU session request message.

The N2 session request message includes N2 SM information and a NAS message that needs to be sent to the UE, and the NAS message includes the session identifier and the N1 SM container.

S312: The RAN establishes an air interface resource with the UE and sends a NAS message to the UE.

The NAS message includes session-related parameters such as the ATSSS rule. In a possible implementation, the NAS message further includes the session establishment accept message.

S313: The RAN sends an N2 session response message to the AMF, where the N2 session response message carries a tunnel endpoint identifier on the RAN side (which is to be sent to the UPF through the AMF and SMF).

S314: The AMF sends the N2 session response message sent by the RAN to the SMF through a session context update request message.

S315: Perform an N4 session modification process.

Specifically, the SMF sends AN tunnel endpoint identifier information on the RAN side to the UPF through the N4 session modification process.

S316: The SMF sends a session context update response message to the AMF.

The MA session needs to be established on both a 3GPP access side and a non-3GPP access side (in other words, the LTE needs to send the session establishment request message on both the 3GPP side and the non-3GPP side). Only the 3GPP side is shown above, and the non-3GPP side is similar, except that the access network is a non-3GPP access network. A specific process is not described.

In actual deployment, network elements may be integrally formed. For example, a policy control function network element and a session management function network element may be integrally formed into one network element. The session management function network element and the user plane network element may be integrally formed into one network element. When two network elements are integrally formed into one network element, interaction between the two network elements provided in this embodiment of this application becomes an internal operation of the integrally formed network element or may be omitted.

It may be learned from the foregoing process that, when configuring the steering mode, the PCF may further configure the PCC rule that includes parameter information such as the steering information and the default path. After obtaining the PCC rule from the PCF, the SMF generates a corresponding N4 rule and sends the N4 rule to the UPF. MAR included in the N4 rule may include parameter information such as the steering information and the default path. In addition, the SMF generates a corresponding ATSSS rule and sends the ATSSS rule to the UE. The ATSSS rule may include parameter information such as the steering information and the default path. Through the foregoing process, the LTE and the UPF may obtain the steering information and the default path.

It should be noted that the PCC rule, the N4 rule, and the ATSSS rule may not include the default path, and the LTE and the UPF may separately configure a default path locally. In this embodiment of this application, no default path may be configured. In other words, none of the PCC rule, the N4 rule, and the ATSSS rule includes the default path, and neither of the UE and the UPF locally configures the default path.

In this embodiment of this application, a target transmission path may be determined from at least two transmission paths based on the steering information. In other words, a first-type transmission path on which data can be transmitted and/or a second-type transmission path on which data cannot be transmitted is determined. The first-type transmission path and the second-type transmission path are separately described below.

In this embodiment of this application, a threshold condition (threshold condition) included in the steering information may be a condition that needs to be met by the transmission path for data transmission. For example, the threshold condition may include one or a combination of more of parameters related to a performance index required for data transmission, such as a packet loss rate, a round-trip delay, and a jitter. A quantity of threshold conditions included in the steering information is not limited. If the steering information includes a plurality of threshold conditions, the plurality of threshold conditions may correspond to a same application rule, or different threshold conditions may correspond to different application rules, or some threshold conditions may correspond to a same application rule, and each of other threshold conditions corresponds to a different application rule.

In this embodiment of this application, the application rule may be determining the target transmission path through the threshold condition. The application rule may have a plurality of implementations. Examples are separately described below.

As described above, the target transmission path includes at least one of the transmission path on which data can be transmitted and the transmission path on which data cannot be transmitted. The transmission path on which data can be transmitted indicates that the transmission path can be used for data transmission. Therefore, the transmission path on which data can be transmitted may also be described as an available transmission path. The transmission path on which data cannot be transmitted indicates that the transmission path cannot be used for data transmission. Therefore, the transmission path on which data cannot be transmitted may also be described as an unavailable transmission path.

When the target transmission path includes available transmission paths, the transmission path for data transmission may alternatively be determined from the available transmission paths based on the steering mode.

For example, the available transmission paths include the first transmission path and the second transmission path. For example, the first transmission path may be a 3GPP path, and the second transmission path may be a non-3GPP path.

When the steering mode is a load-balancing mode, both the first transmission path and the second transmission path may be determined as the transmission path for data transmission. During the data transmission, a steering proportion of the first transmission path and a steering proportion of the second transmission path are steering proportions configured in the load-balancing mode.

When the steering mode is an active-standby mode, if an active path is the first transmission path, the active path, that is, the first transmission path, may be determined as the transmission path for data transmission.

When the steering mode is a smallest delay mode, the terminal device or the UPF monitors a round-trip delay of each transmission path in real time, and determines one of the first transmission path and the second transmission path with a shortest round-trip delay as the transmission path for data transmission.

When the steering mode is a priority-based mode, assuming that a path priority of the first transmission path is higher than a path priority of the second transmission path, the first transmission path is determined as the transmission path for data transmission. When the transmission path with a higher path priority has no congestion, all service flow data is transmitted through the transmission path with a higher path priority (that is, the first transmission path). When congestion occurs on the transmission path with a higher path priority, partial service flow data is transmitted through a transmission path with a lower path priority (that is, the second transmission path).

If it is determined, based on the steering information, that the at least two transmission paths do not meet some or all threshold conditions in the steering information, or if it is determined, based on the steering information, that the at least two transmission paths are transmission paths on which data cannot be transmitted, the following cases occur.

In case 1, if a default path is not empty, the default transmission path is determined as the transmission path on which data can be transmitted. In other words, data is transmitted through the default path.

In case 2, no data is transmitted. In other words, data is not transmitted through any path.

In case 3, if the default path is empty or no default path is configured, data is not transmitted.

In case 4, if the default path is empty or no default path is configured, data is transmitted through the transmission path determined based on the steering mode. The steering mode is configured by a network element of a core network, for example, may be configured through the PCC rule.

Possible implementations of the threshold condition and the application rule are separately described below through examples. It should be noted that in the following embodiments, an example in which the at least two transmission paths include the 3GPP path and the non-3GPP path is used for description. Other cases may be deduced by analogy, and details are not described herein. Embodiments of this application may be independent solutions, or may be combined based on internal logic. These solutions all fall within the protection scope of this application.

### Embodiment 1

When the steering information includes one or more threshold conditions, the threshold conditions can be used for determining whether transmission paths in the at least two transmission paths are available transmission paths. The application rule included in the steering information may include the following content.
1. For any one of the at least two transmission paths, if the transmission path meets some or all the threshold conditions in the steering information, it may be determined that the transmission path can be used for data transmission, that is, the transmission path is the first-type transmission path.

It should be noted that if a plurality of transmission paths meet some or all the threshold conditions in the steering information, during data transmission, the transmission path for data transmission may be selected in any one of the following manners.

In manner 1, one or more transmission paths are selected from the plurality of transmission paths for data transmission at random or in another manner.

In manner 2, one or more transmission paths in the plurality of transmission paths are determined as the transmission path for data transmission based on the steering mode.

For example, that the first transmission path and the second transmission path meet some or all the threshold conditions in the steering information is used as an example. In one or more threshold conditions included in the steering information, if a quantity of threshold conditions met by the first transmission path is greater than a quantity of threshold conditions met by the second transmission path, the first transmission path may be determined as the transmission path for transmitting data, or vice versa. Details are not described herein.

It should be noted that if the steering information includes only one threshold condition, a transmission path that meets the threshold condition may be determined as the transmission path on which data can be transmitted.

In manner 3, one or more transmission paths in the plurality of transmission paths are determined as the transmission path for data transmission or the target transmission path based on the steering mode. For example, in the active-standby mode, if the active path meets some or all the threshold conditions in the steering information, the active path may be determined as the transmission path for data transmission. For another example, in the smallest delay mode, if a plurality of transmission paths meet some or all the threshold conditions in the steering information, a transmission path with a shortest round-trip delay is selected for data transmission.

Manner 1 to Manner 3 may be used in combination or separately.

2. For any one of the at least two transmission paths, if the path does not meet one or more threshold conditions in the steering information, it may be determined that the path cannot be used for data transmission. In other words, the path is the second-type transmission path.

3. If the at least two transmission paths do not meet some or all the threshold conditions in the steering information, or it is determined, based on the steering information, that the at least two transmission paths are transmission paths on which data cannot be transmitted, the following cases occur.

In case 1, if a default path is not empty, the default transmission path is determined as the target transmission path. The target transmission path is a transmission path on which data can be transmitted. In other words, data is transmitted through the default path.

In case 2, no data is transmitted. In other words, data is not transmitted through any path.

In case 3, if the default path is empty or no default path is configured, data is not transmitted.

In case 4, if the default path is empty or no default path is configured, data is transmitted through the transmission path determined based on the steering mode. The steering mode is configured by a network element of a core network, for example, may be configured through the PCC rule.

For example, that the at least two transmission paths are a 3GPP path and a non-3GPP path is used as an example. The steering information and the steering mode configured by the PCF are shown in Table 1.

**Table 1**

| Information name (information name) | Description (description) |
|---|---|
| Application description symbol | Identify application-layer service flows in the steering mode |
| Steering mode | Load-balancing mode: steering proportion of the 3GPP path: 80%, and steering proportion of the non-3GPP path: 20% |
| Steering information | Packet loss rate: less than 0.01% |
| Default path | 3GPP path |

It may be learned from Table 1 that, the steering mode configured by the PCF is the load-balancing mode, the threshold condition included in the steering information is that a packet loss rate is less than 0.01%, and the default path is the 3GPP path. In the load-balancing mode, data transmission may be simultaneously performed on the 3GPP path and the non-3GPP path. Therefore, both the 3GPP path and the non-3GPP path can be used for data transmission as long as the 3GPP path and the non-3GPP path meet the threshold condition. The determined transmission path is discussed below in different cases.

If the 3GPP path and the non-3GPP path both meet the condition that a packet loss rate is less than 0.01%, the 3GPP path and the non-3GPP path both can be used for data transmission, and the two transmission paths are both the first-type transmission path. In this case, the data may be transmitted based on the steering proportion configured by the PCF. To be specific, 80% of the data is transmitted through the 3GPP path, and 20% of the data is transmitted through the non-3GPP path.

If one of the 3GPP path and the non-3GPP path (for example, the non-3GPP path) does not meet the condition that a packet loss rate is less than 0.01%, and the other path (for example, the 3GPP path) meets the condition that a packet loss rate is less than 0.01%, that is, one path is the first-type transmission path, and the other path is the second-type transmission path, data is transmitted through a path that meets the condition that a packet loss rate is less than 0.01%, that is, transmitted through the 3GPP path. A path that does not meet the condition that a packet loss rate is less than 0.01% is not used for data transmission.

If neither of the 3GPP path and the non-3GPP path meets the condition that a packet loss rate is less than 0.01%, that is, both the two transmission paths are the second-type transmission path, the data is transmitted through the default path.

Certainly, if the default path is empty or no default path is configured, the data may not be transmitted. Alternatively, if the default path is empty or no default path is configured, the data is transmitted based on the steering mode configured by the PCF. To be specific, 80% of the data is transmitted through the 3GPP path, and 20% of the data is transmitted through the non-3GPP path.

For another example, the at least two transmission paths are respectively a 3GPP path and a non-3GPP path. The steering information and the steering mode configured by the PCF are shown in Table 2.

**Table 2**

| Information name (information name) | Description (description) |
|---|---|
| Application description symbol | Identify application-layer service flows in the steering mode |
| Steering mode | Active-standby mode: active path: 3GPP path, and standby path: non-3GPP path |
| Steering information | Packet loss rate: less than 0.01% |
| Default path | Non-3GPP path |

It may be learned from Table 2 that, the steering mode configured by the PCF is the active-standby mode, the threshold condition included in the steering information is that a packet loss rate is less than 0.01%, and the default path is the non-3GPP path. In the active-standby mode, only one path can be used for data transmission in a same time period. Therefore, the transmission path for data transmission may be determined based on different cases as follows:

If the active path, that is, the 3GPP path, meets the condition that a packet loss rate is less than 0.01%, the data is transmitted through the active path, that is, the 3GPP path. In this case, even if the standby path (that is, the non-3GPP path) meets the condition that a packet loss rate is less than 0.01%, the data is not transmitted through the standby path. In this manner, although both the two transmission paths are the first-type transmission path, the data transmission path needs to be determined based on the steering mode.

If the active path (that is, the 3GPP path) does not meet the condition that a packet loss rate is less than 0.01%, but the standby path meets the condition that a packet loss rate is less than 0.01%, the data is transmitted through the standby path, that is, the non-3GPP path.

If neither of the active path (that is, the 3GPP path) and the standby path (the non-3GPP path) meets the condition that a packet loss rate is less than 0.01%, that is, both the two transmission paths are the second-type transmission path, the data is transmitted through the default path.

Certainly, if the default path is empty or no default path is configured, the data may not be transmitted. Alternatively, if the default path is empty or no default path is configured, data is transmitted based on the steering mode configured by the PCF. To be specific, when the active path is available, all the service flow data is transmitted through the active path. When the active path is unavailable, all the service flow data is transmitted through the standby path.

For example, the steering information and the steering mode included in the PCC rule configured by the PCF are shown in Table 3.

**Table 3**

| Information name (information name) | Description (description) |
|---|---|
| Application description symbol | Identify application-layer service flows in the steering mode |
| Steering mode | Active-standby mode: active path: 3GPP path, and standby path: non-3GPP path |
| Steering information | Packet loss rate: less than 0.01%; and round-trip delay: less than 10 ms |
| Default path | 3GPP path |

It may be learned from Table 3 that, the steering mode configured by the PCF is the active-standby mode, and the threshold condition included in the steering information includes that a packet loss rate is less than 0.01% and that a round-trip delay is less than 10 ms. The default path is the 3GPP path.

In this example, the application rule may be used for defining the following: a transmission path that meets at least one threshold condition is the first-type transmission path and that a transmission path that does not meet any restriction condition is the second-type transmission path. Certainly, the first-type transmission path and the second-type transmission path may be defined in another manner. Details are not described herein.

If the active path, that is, the 3GPP path, meets the condition that a packet loss rate is less than 0.01% and that a round-trip delay is less than 10 ms, the data is transmitted through the active path, that is, the 3GPP path. In this case, even if the standby path (that is, the non-3GPP path) meets the condition that a packet loss rate is less than 0.01% and that a round-trip delay is less than 10 ms, the data is not transmitted through the standby path. In this manner, although both the two transmission paths are the first-type transmission path, the data transmission path needs to be determined based on the steering mode.

If only one of the active path and the standby path meets the condition that a packet loss rate is less than 0.01% and that a round-trip delay is less than 10 ms, and the other path meets the condition that a packet loss rate is less than 0.01% or that a round-trip delay is less than 10 ms, a path that meets a largest quantity of threshold conditions can be used as the data transmission path.

If each of the active path and the standby path meets only that a packet loss rate is less than 0.01% or only that a round-trip delay is less than 10 ms, the data is transmitted through the active path, that is, the 3GPP path.

If the packet loss rate of the active path (that is, the 3GPP path) is not less than 0.01% or the round-trip delay is less than 10 ms, but the packet loss rate of the standby path is less than 0.01% and the round-trip delay is less than 10 ms, the data is transmitted through the standby path, that is, the non-3GPP path.

If neither of the active path (that is, the 3GPP path) and the standby path (the non-3GPP path) meets the condition that a packet loss rate is less than 0.01% and that a round-trip delay is less than 10 ms, that is, both the two transmission paths are the second-type transmission path, the data is transmitted through the default path.

Certainly, if the default path is empty or no default path is configured, the data may not be transmitted. Alternatively, if the default path is empty or no default path is configured, the data is transmitted based on the steering mode configured by the PCF. To be specific, when the active path is available, all the service flow data is transmitted through the active path. When the active path is unavailable, all the service flow data is transmitted through the standby path.

The foregoing is merely an example. When the steering information includes a plurality of threshold conditions, other cases may occur, which are not enumerated herein.

The default path is configured, so that when no transmission path meets the threshold condition, data may be transmitted through the default path, which avoids a failure to determine how to perform steered data transmission.

### Embodiment 2

The steering information includes one or more threshold conditions, an application rule corresponding to each threshold condition is attribute information, the attribute information includes a mandatory condition or an optional condition, and the attribute information indicates that the threshold condition is a mandatory condition or an optional condition. For a threshold condition whose attribute information is a mandatory condition, when a transmission path does not meet the threshold condition, the transmission path cannot be used for data transmission. In other words, the transmission path is the second-type transmission path. When a transmission path meets all the threshold conditions in the steering information whose attribute information is a mandatory condition, the transmission path can be used for data transmission. In other words, the transmission path is the first-type transmission path.

In a possible implementation, the steering information includes one or more threshold conditions whose attribute information is an optional condition. If both the first transmission path and the second transmission path meet the threshold conditions in the steering information whose attribute information is a mandatory condition, when the first transmission path does not meet at least threshold condition in the steering information whose attribute information is an optional condition and the second transmission path meets all the threshold conditions in the steering information whose attribute information is an optional condition, a steering proportion of data to be transmitted on the first path may be reduced, and a steering proportion of data to be transmitted on the second transmission path may be increased.

It should be noted that if a steering proportion of a transmission path is 0, the data may not be transmitted through the transmission path. For example, a preconfigured steering proportion of the first transmission path is 20%, and a preconfigured steering proportion of the second transmission path is 80%. When the first transmission path does not meet the at least threshold condition in the steering information whose attribute information is an optional condition and the second transmission path meets all the threshold conditions in the steering information whose attribute information is an optional condition, the steering proportion of the first transmission path is set to 0%, and the steering proportion of the second transmission path is set to 100%. In this case, the data is transmitted through the first transmission path.

It should be noted that if a plurality of transmission paths meet all the threshold conditions in the steering information whose attribute information is a mandatory condition, during the data transmission, the transmission path for data transmission may be selected in any one of the following manners.

In manner 1, one or more transmission paths are selected from the plurality of transmission paths for data transmission at random or in another manner.

In manner 2, the transmission path for data transmission is determined based on a quantity of threshold conditions met by each transmission path. For example, in the active-standby mode, if the active path and the standby path meet some or all the threshold conditions in the steering information, the active path may be determined as the transmission path for data transmission.

In Embodiment 2, if the at least two transmission paths do not meet all the threshold conditions in the steering information whose attribute information is a mandatory condition, or it is determined based on the steering information that all of the at least two transmission paths are the transmission path on which data cannot be transmitted, the following cases occur.

In case 1, if a default path is not empty, the default transmission path is determined as the target transmission path. The target transmission path is a transmission path on which data can be transmitted. In other words, data is transmitted through the default path.

In case 2, no data is transmitted. In other words, data is not transmitted through any path.

In case 3, if the default path is empty or no default path is configured, data is not transmitted.

In case 4, if the default path is empty or no default path is configured, data is transmitted through the transmission path determined based on the steering mode. The steering mode is configured by a network element of a core network, for example, may be configured through the PCC rule.

For example, the at least two transmission paths are respectively a 3GPP path and a non-3GPP path. The steering information and the steering mode configured by the PCF are shown in Table 4.

**Table 4**

| Information name (information name) | Description (description) |
|---|---|
| Application description symbol | Identify application-layer service flows in the steering mode |
| Steering mode | Load-balancing mode: steering proportion of the 3GPP path: 80%, and steering proportion of the non-3GPP path: 20% |
| Steering information | Packet loss rate: less than 0.01%, and attribute information: mandatory condition; |
| | round-trip delay: less than 10 ms, and attribute information: mandatory condition; and |
| | jitter: less than 1%, and attribute information: optional condition |
| Default path | 3GPP path |

It may be learned from Table 4 that, the steering mode configured by the PCF is the load-balancing mode, and the threshold condition and the application rule included in the steering information are as follows: a packet loss rate is less than 0.01%, attribute information: mandatory condition; a round-trip delay is less than 10 ms, attribute information: mandatory condition; and a jitter is less than 1%, attribute information: optional condition. The default path is the 3GPP path.

If the 3GPP path and the non-3GPP path both meet the condition that a packet loss rate is less than 0.01% and that a round-trip delay is less than 10 ms, both the 3GPP path and the non-3GPP path both can be used for data transmission, and the two transmission paths are both the first-type transmission path. In this case, the data may be transmitted based on the steering proportion configured by the PCF. To be specific, 80% of the data is transmitted through the 3GPP path, and 20% of the data is transmitted through the non-3GPP path. In addition, if a transmission path does not meet the condition that a jitter is less than 1%, but another transmission path meets the condition that a jitter is less than 1%, a steering proportion of the transmission path that does not meet the condition that a jitter is less than 1% may be reduced, and a steering proportion of the transmission path that meets the condition that a jitter is less than 1% may be increased.

If one of the 3GPP path and the non-3GPP path (for example, the non-3GPP path) does not meet the condition that a packet loss rate is less than 0.01% or that a round-trip delay is less than 10 ms, and the other path (for example, the 3GPP path) meets the condition that a packet loss rate is less than 0.01% and that a round-trip delay is less than 10 ms, the data is transmitted through the transmission path that meets the condition that a packet loss rate is less than 0.01% and that a round-trip delay is less than 10 ms, that is, through the 3GPP path. The transmission path that does not meet the condition that a packet loss rate is less than 0.01% or that a round-trip delay is less than 10 ms is not used for data transmission.

If neither of the 3GPP path and the non-3GPP path meets the condition that a packet loss rate is less than 0.01% or that a round-trip delay is less than 10 ms, that is, both the two transmission paths are the second-type transmission path, the data is transmitted through the default path.

Certainly, if the default path is empty or no default path is configured, the data may not be transmitted. Alternatively, if the default path is empty or no default path is configured, the data is transmitted based on the steering mode configured by the PCF. To be specific, 80% of the data is transmitted through the 3GPP path, and 20% of the data is transmitted through the non-3GPP path.

For another example, the at least two transmission paths are respectively a 3GPP path and a non-3GPP path. The steering information and the steering mode configured by the PCF are shown in Table 5.

**Table 5**

| Information name (information name) | Description (description) |
|---|---|
| Application description symbol | Identify application-layer service flows in the steering mode |
| Steering mode | Active-standby mode: active path: 3GPP path, and standby path: non-3GPP path |
| Steering information | Packet loss rate: less than 0.01%, and attribute information: mandatory condition; |
| | round-trip delay: less than 10 ms, and attribute information: mandatory condition; and |
| | jitter: less than 1%, and attribute information: optional condition |
| Default path | 3GPP path |

It may be learned from Table 5 that, the steering mode configured by the PCF is the active-standby mode, and the threshold condition and the application rule included in the steering information are as follows: a packet loss rate is less than 0.01%, attribute information: mandatory condition; a round-trip delay is less than 10 ms, attribute information: mandatory condition; and a jitter is less than 1%, attribute information: optional condition. The default path is the 3GPP path.

If the active path meets the condition that a packet loss rate is less than 0.01% and that a round-trip delay is less than 10 ms, the data is transmitted through the active path, that is, the 3GPP path. In this case, even if the standby path (that is, the non-3GPP path) meets the condition that a packet loss rate is less than 0.01% and that a round-trip delay is less than 10 ms, the data is not transmitted through the standby path.

If one of the active path and the standby path (for example, the non-3GPP path) does not meet the condition that a packet loss rate is less than 0.01% or a round-trip delay is less than 10 ms, but the other path (for example, the 3GPP path) meets the condition that a packet loss rate is less than 0.01% and that a round-trip delay is less than 10 ms, the data is transmitted through the transmission path that meets the condition that a packet loss rate less than 0.01% and that a round-trip delay less than 10 ms, that is, transmitted through the 3GPP path. The transmission path that does not meet the condition that a packet loss rate is less than 0.01% or that a round-trip delay is less than 10 ms is not used for data transmission.

If neither of the active path and the standby path meets the condition that a packet loss rate is less than 0.01% or that a round-trip delay is less than 10 ms, that is, both the two transmission paths are the second-type transmission path, the data is transmitted through the default path.

Certainly, if the default path is empty or no default path is configured, the data may not be transmitted. Alternatively, if the default path is empty or no default path is configured, the data is transmitted based on the steering mode configured by the PCF. To be specific, when the active path is available, all the service flow data is transmitted through the active path. When the active path is unavailable, all the service flow data is transmitted through the standby path.

In Embodiment 2, through the attribute information, different steering modes may be performed when the path does not meet the threshold conditions of different attribute information. For example, when some service flows are sensitive to a packet loss rate, attribute information of a threshold condition related to the packet loss rate is configured as a mandatory condition. In this way, when the path does not meet the threshold condition related to the packet loss rate, the service flow may be transmitted through another path that meets the threshold condition related to the packet loss rate. Similarly, if some service flows are insensitive to some threshold conditions, for example, insensitive to a round-trip delay, attribute information of the threshold conditions may be configured as an optional condition. When the path does not meet the threshold condition, it is not necessary to switch all service flows originally to be transmitted on the path to another path that meets the threshold condition for transmission. Instead, only the service flows to be transmitted on the path need to be reduced.

### Embodiment 3

The steering information includes one or more threshold conditions, an application rule corresponding to each threshold condition is priority information, and the priority information indicates a priority of the threshold condition.

The threshold condition can be used for determining whether a transmission path is an available transmission path. If the transmission path does not meet the threshold condition, the transmission path may be considered as unavailable. If the transmission path meets the threshold condition, it is determined whether the transmission path is available and whether the transmission path can be used for data transmission. However, during the data transmission, whether to use the transmission path that meets the threshold condition or a steering proportion for using the transmission path further needs to be determined based on a priority of the threshold condition.

The priority of the threshold condition can be used for determining the target transmission path and/or the steering proportion. When a priority of the threshold condition is high, a steering proportion of the transmission path that meets the threshold condition has a high priority, or the transmission path that meets the threshold condition is determined as the target transmission path. For example, only one transmission path is required for data transmission. If a priority of a threshold condition met by the first transmission path is higher than a priority of a threshold condition met by the second transmission path, the data is transmitted through the first transmission path, or vice versa.

When a plurality of threshold conditions exist, if a transmission path meets the plurality of threshold conditions, a threshold condition with a highest priority in the threshold conditions met by the transmission path is used as a reference. For example, if the first transmission path meets a first threshold condition and a second threshold condition and a priority of the first threshold condition is higher than a priority of the second threshold condition, a priority or a steering proportion for performing data transmission on the transmission path is determined based on the priority of the first threshold condition.

For example, the at least two transmission paths are respectively a 3GPP path and a non-3GPP path. The steering information and the steering mode configured by the PCF are shown in Table 6.

**Table 6**

| Information name (information name) | Description (description) |
|---|---|
| Application description symbol | Identify application-layer service flows in the steering mode |
| Steering mode | Load-balancing mode: steering proportion of the 3GPP path: 80%, and steering proportion of the non-3GPP path: 20% |
| Steering information | Packet loss rate: less than 0.01%, and priority: 1; |
| | round-trip delay: less than 10 ms, and priority: 2; |
| | jitter: less than 1%, and priority: 3 |
| Default path | 3GPP path |

It may be learned from Table 6 that, the steering mode configured by the PCF is the load-balancing mode, and the threshold condition and the application rule included in the steering information are as follows: a packet loss rate is less than 0.01%, and a priority is 1; a round-trip delay is less than 10 ms, and a priority is 2; and a jitter is less than 1%, a priority is 3, and it is assumed that a smaller priority value indicates a higher priority. The default path is the 3GPP path.

It is assumed that in the load-balancing mode, data is preferentially transmitted through a transmission path with a higher priority that meets the threshold condition. When a priority of a threshold condition met by the 3GPP path is the same as a priority of a threshold condition met by the non-3GPP path, the data is transmitted with a steering proportion of 80% for the 3GPP path and a steering proportion of 20% for the non-3GPP path.

Specifically, if one of the 3GPP path and the non-3GPP path (for example, the non-3GPP path) does not meet the condition that a packet loss rate is less than 0.01%, and the other transmission path (for example, the 3GPP path) meets the condition that a packet loss rate is less than 0.01%, the data is preferentially transmitted through the transmission path that meets the condition that a packet loss rate is less than 0.01%. In a possible implementation, the data is transmitted through only the transmission path that meets the condition that a packet loss rate is less than 0.01%, or a steering proportion of the transmission path that meets the condition that a packet loss rate is less than 0.01% is increased. If both the 3GPP path and the non-3GPP path meet the condition that a packet loss rate is less than 0.01%, the data is transmitted with a steering proportion of 80% for the 3GPP path and a steering proportion of 20% for the non-3GPP path.

If neither of the 3GPP path and the non-3GPP path meets the condition that a packet loss rate is less than 0.01%, if one of the transmission paths (for example, the non-3GPP path) does not meet the condition that a round-trip delay is less than 10 ms, but the other transmission path (for example, the 3GPP path) meets the condition that a round-trip delay is less than 10 ms, the data is preferentially transmitted through the transmission path that meets the condition that a round-trip delay is less than 10 ms. If neither of the 3GPP path and the non-3GPP path meets the condition that a packet loss rate is less than 0.01%, but both meet the condition that a packet loss rate is less than 0.01%, the data is transmitted with a steering proportion of 80% for the 3GPP path and a steering proportion of 20% for the non-3GPP path.

If neither of the 3GPP path and the non-3GPP path meets the condition that a packet loss rate is less than 0.01% and the condition that a round-trip delay is less than 10 ms, if one of the transmission paths (for example, the non-3GPP path) does not meet the condition that a jitter is less than 1%, and the other transmission path (for example, the 3GPP path) meets the condition that a jitter is less than 1%, the data is preferentially transmitted through the transmission path that meets the condition that a jitter is less than 1%. If neither of the 3GPP path and the non-3GPP path meets the condition that a packet loss rate is less than 0.01%, and neither of the 3GPP path and the non-3GPP path meets the condition that a packet loss rate is less than 0.01%, but the 3GPP path and the non-3GPP path both meet the condition that a jitter is less than 1%, the data is transmitted with a steering proportion of 80% for the 3GPP path and a steering proportion of 20% for the non-3GPP path.

When neither of the 3GPP path and the non-3GPP path meets all the threshold conditions, that is, both the two transmission paths are the second-type transmission path, the data is transmitted through the default path.

Certainly, if the default path is empty or no default path is configured, the data may not be transmitted. Alternatively, if the default path is empty or no default path is configured, the data is transmitted based on the steering mode configured by the PCF. To be specific, 80% of the data is transmitted through the 3GPP path, and 20% of the data is transmitted through the non-3GPP path.

For another example, the at least two transmission paths are respectively a 3GPP path and a non-3GPP path. The steering information and the steering mode configured by the PCF are shown in Table 7.

**Table 7**

| Information name (information name) | Description (description) |
|---|---|
| Application description symbol | Identify application-layer service flows in the steering mode |
| Steering mode | Active-standby mode: active path: 3GPP path, and standby path: non-3GPP path |
| Steering information | Packet loss rate: less than 0.01%, and priority: 1; and jitter: less than 1%, and priority: 2 |
| Default path | 3GPP path |

It may be learned from Table 7 that, the steering mode configured by the PCF is the active-standby mode, and the threshold condition and the application rule included in the steering information are as follows: a packet loss rate is less than 0.01%, and a priority is 1; and a jitter is less than 1%, a priority is 2, and it is assumed that a smaller priority value indicates a higher priority. The default path is the 3GPP path.

It is assumed that in the active-standby mode, data is preferentially transmitted through a transmission path with a higher priority that meets the threshold condition. When a priority of a threshold condition met by the 3GPP path is the same as a priority of a threshold condition met by the non-3GPP path, the data is transmitted through the active path.

If the active path, that is, the 3GPP path, meets the condition that a packet loss rate is less than 0.01%, the data is transmitted through the active path, that is, the 3GPP path.

If the active path does not meet the condition that a packet loss rate is less than 0.01%, but the standby path meets the condition that a packet loss rate is less than 0.01%, the data is transmitted through the standby path, that is, the non-3GPP path.

If neither of the active path and the standby path meets the condition that a packet loss rate is less than 0.01%, if the active path meets the condition that a jitter is less than 1%, the data is transmitted through the active path, that is, the 3GPP path. If the active path does not meet the condition that a jitter is less than 1%, but the standby path meets the condition that a jitter is less than 1%, the data is transmitted through the standby path.

When neither of the active path and the standby path meets all the threshold conditions, the data is transmitted through the default path.

Certainly, if the default path is empty or no default path is configured, the data may not be transmitted. Alternatively, if the default path is empty or no default path is configured, the data is transmitted based on the steering mode configured by the PCF. To be specific, when the active path is available, all the service flow data is transmitted through the active path. When the active path is unavailable, all the service flow data is transmitted through the standby path.

The priority is configured for the threshold condition, so that when a plurality of threshold conditions are applied to a steering mode, a transmission path for transmitting data and/or a steering proportion of a transmission path may be determined based on the priorities of the threshold conditions, thereby avoiding a failure to determine steering of service flow data through a unified rule when a transmission path meets only partial threshold conditions.

### Embodiment 4

The steering information includes one or more threshold conditions, an application rule corresponding to each threshold condition is level information, and the level information indicates a level of the threshold condition.

The threshold condition can be used for determining whether a transmission path is an available transmission path. If the transmission path does not meet the threshold condition, the transmission path may be considered as unavailable. If the transmission path meets the threshold condition, it is determined whether the transmission path is available and whether the transmission path can be used for data transmission. However, during the data transmission, whether to use the transmission path that meets the threshold condition or a steering proportion for using the transmission path further needs to be determined based on a level of the threshold condition.

The level of the threshold condition can be used for determining a steering proportion for data transmission on a transmission path that meets the threshold condition.

For example, the threshold condition in the steering information includes a first threshold condition and a second threshold condition, and the application rule includes a first level corresponding to the first threshold condition and a second level corresponding to the second threshold condition. If the first transmission path meets the first threshold condition, and the second transmission path meets the second threshold condition, the steering proportion of the first transmission path and the steering proportion of the second transmission path may be determined based on the first level and the second level. Specifically, a correspondence may exist between a level of a threshold condition and a steering proportion, and a steering proportion of each transmission path may be determined based on the correspondence.

It should be noted that the correspondence between a level of a threshold condition and a steering proportion may be included in the steering information, or may be agreed upon in advance, or may be configured by a terminal device or a user plane device. This is not limited in this embodiment of this application.

In a possible implementation, a higher level of a threshold condition indicates a higher steering proportion for data transmission performed on a transmission path that meets the threshold condition.

When a plurality of threshold conditions exist, if a transmission path meets the plurality of threshold conditions, a threshold condition with a highest level in the threshold conditions met by the transmission path is used as a reference. For example, if the first transmission path meets a first threshold condition and a second threshold condition and a level of the first threshold condition is higher than a level of the second threshold condition, a steering proportion for performing data transmission on the first transmission path is determined based on the level of the first threshold condition.

For example, the at least two transmission paths are respectively a 3GPP path and a non-3GPP path. The steering information and the steering mode configured by the PCF are shown in Table 8.

**Table 8**

| Information name (information name) | Description (description) |
|---|---|
| Application description symbol | Identify application-layer service flows in the steering mode |
| Steering mode | Load-balancing mode: steering proportion of the 3GPP path: 80%, and steering proportion of the non-3GPP path: 20% |
| Steering information | Packet loss rate: less than 0.01%, delay: less than 10 ms, and level: 1; |
| | packet loss rate: less than 0.1%, delay: less than 10 ms, and level: 2; |
| | packet loss rate: less than 0.1%, delay: less than 100 ms, and level: 3; |
| | steering proportions of same levels: 50%:50%; |
| | steering proportions of level 1 and level 2: 70%:30%; |
| | steering proportions of level 1 and level 3: 80%:20%; and |
| | steering proportions of level 2 and level 3: 60%:40% |
| Default path | 3GPP path |

It may be learned from Table 8 that, the steering mode configured by the PCF is the load-balancing mode, and the threshold condition and the application rule included in the steering information are as follows: a packet loss rate is less than 0.01%, a delay is less than 10 ms, and a level is 1; a packet loss rate is less than 0.1%, a delay is less than 10 ms, and a level is 2; and a packet loss rate is less than 0.1%, a delay is less than 100 ms, and a level is 3. The default path is the 3 GPP path. A correspondence between a level of a threshold condition and a steering proportion is as follows: when highest levels in threshold conditions met by two transmission paths are the same, steering proportions of the two transmission paths are 50% and 50% respectively; when a highest level in a threshold condition met by a transmission path is a level 1, and a highest level in a threshold condition met by another transmission path is a level 2, steering proportions of the transmission path that meets the threshold condition with the level 1 and the transmission path that meets the threshold condition with the level 2 are 70% and 30% respectively; when a highest level in a threshold condition met by a transmission path is a level 1, and a highest level in a threshold condition met by another transmission path is a level 3, steering proportions of the transmission path that meets the threshold condition with the level 1 and the transmission path that meets the threshold condition with the level 3 are 80% and 20% respectively; and when a highest level in a threshold condition met by a transmission path is a level 2, and a highest level in a threshold condition met by another transmission path is a level 3, steering proportions of the transmission path that meets the threshold condition with the level 2 and the transmission path that meets the threshold condition with the level 3 are 60% and 40% respectively.

It should be noted that in the foregoing example, in the levels 1 to 3, the level 1 is a highest level, and the level 3 is a lowest level. It is most difficult to meet the threshold condition corresponding to the highest level, and this case is more suitable for data transmission. It is easiest to meet the threshold condition corresponding to the lowest level. Therefore, the steering proportion of the transmission path that meets the threshold condition with the high level may be greater than the steering proportion of the transmission path that meets the threshold condition with the low level.

Based on the foregoing steering information, if the 3GPP path and the non-3GPP path meet threshold conditions with a same level (for example, highest level in the threshold conditions that are met are a level 1, a level 2, or a level 3), the 3GPP path and the non-3GPP path may transmit a service flow with proportions of 50% and 50%. If a path (for example, the 3GPP path) meets a threshold condition with the level 2, and another path (for example, the non-3GPP path) meets a threshold condition with the level 3, the 3GPP path and the non-3GPP path transmit a service flow with proportions of 40% and 60%, and so on. If neither of the two paths meets the threshold conditions of all levels, the data is transmitted through the default path.

In a possible implementation, the steering proportion may be set to 0% and 100%. In this case, the target transmission path is a transmission path with a steering proportion of 100%.

Certainly, if the default path is empty or no default path is configured, the data may not be transmitted. Alternatively, if the default path is empty or no default path is configured, the data is transmitted based on the steering mode configured by the PCF. To be specific, 80% of the data is transmitted through the 3GPP path, and 20% of the data is transmitted through the non-3GPP path.

In Embodiment 4, through classification based on the threshold condition, in a status change process of a path, the path status may be classified into different levels, and the service flow data steering proportion may be determined based on a current level of the path. An advantage of this is that more refined steering can be achieved, that is, the steering proportion is not changed based on a single threshold condition, and different levels of steering proportions may be achieved. In this way, when the path has different states, the steering proportion may be dynamically modified, so as to adapt to a network status more effectively.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, a software module, or a combination of the hardware structure and the software module. Whether a function in the foregoing functions is to be performed by the hardware structure, the software module, or the combination of the hardware structure and the software module depends on a specific application and a design constraint of the technical solutions.

The module division in embodiments of this application is an example, and is merely logical function division. There may be another division manner in an actual implementation. In addition, functional modules in embodiments of this application may be integrated into one processor, or may exist alone physically, or two or more modules may be integrated into one module. The integrated module may be implemented in a form of hardware, or may be implemented in a form of a software function module.

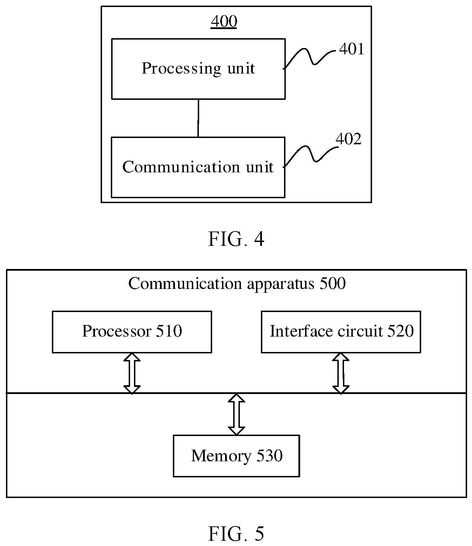

Same as the foregoing concept, as shown in FIG. 4, an embodiment of this application further provides an apparatus 400 configured to implement the function of the network device or the terminal device in the foregoing method. For example, the apparatus may be a software module or a chip system. In this embodiment of this application, the chip system may include a chip, or may include a chip and another discrete device. The apparatus 400 may include a processing unit 401 and a communication unit 402.

In this embodiment of this application, the communication unit may also be referred to as a transceiver unit, and may include a sending unit and/or a receiving unit, which are respectively configured to perform sending and receiving steps of the network device or the terminal device in the foregoing method embodiment.

The communication apparatus provided in this embodiment of this application is described below with reference to FIG. 4 to FIG. 5. It should be understood that the description of the apparatus embodiment corresponds to the description of the method embodiment. Therefore, for content not described in detail, refer to the foregoing method embodiment. For brevity, the details are not described herein.

The communication unit may also be referred to as a transceiver, a transceiver machine, a transceiver apparatus, or the like. The processing unit may also be referred to as a processor, a processing board, a processing module, a processing apparatus, or the like. Optionally, a device in the communication unit 402 configured to implement the receiving function may be considered as a receiving unit, and a component in the communication unit 402 configured to implement the sending function may be considered as a sending unit. In other words, the communication unit 402 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receiving circuit, or the like. The sending unit may also be referred to as a transmitter machine, a transmitter, a transmitting circuit, or the like.

When the communication apparatus 400 performs the function of the terminal device or the user plane network element in the process shown in FIG. 2 or FIG. 3 in the foregoing embodiment,
the communication unit is configured to obtain steering information, where the steering information includes a threshold condition and an application rule corresponding to the threshold condition; and
the processing unit is configured to determine a target transmission path from at least two transmission paths based on the steering information, where the at least two transmission paths include a first transmission path using a first access technology and a second transmission path using a second access technology.

The foregoing is merely an example. The processing unit 401 and the communication unit 402 may further perform other functions. For more detailed description, refer to the related description in the method embodiment shown in FIG. 2 or FIG. 3. The details are not described herein.

FIG. 5 shows an apparatus 500 according to an embodiment of this application. The apparatus shown in FIG. 5 may be an implementation of a hardware circuit of the apparatus shown in FIG. 4. The communication apparatus is applicable to the foregoing flowchart, and performs the function of the terminal device or the network device in the foregoing method embodiment. For ease of description, FIG. 5 shows only main components of the communication apparatus.

As shown in FIG. 5, the communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required for the processor 510 to run the instructions, or store data generated after the processor 510 runs the instructions.

When the communication apparatus 500 is configured to implement the method shown in FIG. 2 or FIG. 3, the processor 510 is configured to implement a function of the processing unit 401, and the interface circuit 520 is configured to implement a function of the communication unit 402.

When the communication apparatus is a chip to be used in the terminal device, the chip in the terminal device implements the function of the terminal device in the foregoing method embodiment. The chip in the terminal device receives information from another module (for example, a radio frequency module or an antenna) in the terminal device, where the information is sent by the network device to the terminal device. Alternatively, the chip in the terminal device sends information to another module (for example, a radio frequency module or an antenna) in the terminal device, where the information is sent by the terminal device to the network device.

When the communication apparatus is a chip to be used in the network device, the chip in the network device implements the function of the network device in the foregoing method embodiment. The chip in the network device receives information from another module (for example, a radio frequency module or an antenna) in the network device, where the information is sent by the terminal device to the network device. Alternatively, the chip in the network device sends information to another module (for example, a radio frequency module or an antenna) in the network device, where the information is sent by the network device to the terminal device.

It may be understood that, the processor in this embodiment of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor, or may be any conventional processor.

The processor in this embodiment of this application may be a random access memory (Random Access Memory, RAM), a flash memory, a read-only memory (Read-Only Memory, ROM), or a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. An example storage medium is coupled to a processor, so that the processor can read information from the storage medium or write information into the storage medium. Certainly, the storage medium may be a component of the processor. The processor and the storage medium may be located in the ASIC. In addition, the ASIC may be located in the network device or the terminal device. Certainly, the processor and the storage medium may alternatively exist in the network device or the terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product to be implemented on one or more computer-usable storage media (including but not limited to a disk memory and an optical memory) that include computer-usable program code.

This application is described with reference to the flowcharts and/or block diagrams of the method, the device (system), and the computer program product according to this application. It should be understood that each process and/or each block in the flowcharts and/or the block diagrams and a combination of the process and/or the block in the flowcharts and/or the block diagrams may be implemented through computer program instructions. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art may make various modifications and variations to this application without departing from the scope of this application. In this way, if these modifications and variations of this application fall within the scope of the claims and their equivalent technologies, this application is also intended to include these modifications and variations.

## Claims

1. A transmission path determining method, comprising:
obtaining steering information, wherein the steering information comprises a threshold condition and an application rule corresponding to the threshold condition; and
determining a target transmission path from at least two transmission paths based on the steering information, wherein the at least two transmission paths comprise a first transmission path using a first access technology and a second transmission path using a second access technology.

2. The method according to claim 1, wherein the application rule comprises:
attribute information corresponding to the threshold condition, wherein the attribute information comprises a mandatory condition or an optional condition, and the attribute information indicates that the threshold condition is a mandatory condition or an optional condition.

3. The method according to claim 2, wherein if the attribute information is an optional condition, the determining a target transmission path from at least two transmission paths based on the steering information comprises:
determining that the first transmission path does not meet the threshold condition and that the second transmission path meets the threshold condition; and
reducing a steering proportion of data in the first transmission path, and increasing a steering proportion of data in the second transmission path.

4. The method according to claim 2, wherein if the attribute information is a mandatory condition, the determining a target transmission path from at least two transmission paths based on the steering information comprises:
determining that the first transmission path does not meet the threshold condition and that the second transmission path meets the threshold condition; and
determining the second transmission path as the target transmission path.

5. The method according to any one of claims 1 to 4, wherein the application rule comprises priority information corresponding to the threshold condition, and the priority information indicates a priority of the threshold condition.

6. The method according to claim 5, wherein the target transmission path comprises the first transmission path; and
a priority of a threshold condition met by the first transmission path is higher than a priority of a threshold condition met by the second transmission path.

7. The method according to any one of claims 1 to 6, wherein the application rule comprises level information corresponding to the threshold condition.

8. The method according to claim 7, wherein the threshold condition comprises a first threshold condition and a second threshold condition, and the application rule comprises a first level corresponding to the first threshold condition and a second level corresponding to the second threshold condition; and
the determining a target transmission path from at least two transmission paths based on the steering information comprises:
determining that the first transmission path meets the first threshold condition, and determining that the second transmission path meets the second threshold condition; and
determining the steering proportion of the first transmission path and the steering proportion of the second transmission path based on the first level and the second level.

9. The method according to any one of claims 1 to 8, wherein the threshold condition comprises a plurality of threshold conditions, and the application rule comprises determining the target transmission path based on a quantity of the plurality of threshold conditions met by the first transmission path and the second transmission path.

10. The method according to claim 1, wherein the determining a target transmission path from at least two transmission paths based on the steering information comprises:
determining that neither of the first transmission path and the second transmission path meets the threshold condition; and
determining a default transmission path as the target transmission path, wherein the default transmission path is at least one of the first transmission path and the second transmission path.

11. The method according to claim 10, wherein the application rule corresponding to the threshold condition comprises: when neither of the first transmission path and the second transmission path meets the threshold condition, determining the default transmission path as the target transmission path.

12. The method according to claim 10 or 11, wherein the default path is sent by a core network element, or the default path is configured by a terminal device or a user plane network element.

13. The method according to any one of claims 1 to 12, wherein the obtaining steering information comprises:
obtaining an access traffic steering, switching, and splitting ATSSS rule, wherein the ATSSS rule comprises the steering information; or
obtaining an N4 rule, wherein the N4 rule comprises the steering information.

14. A communication apparatus, comprising:
a communication unit, configured to obtain steering information, wherein the steering information comprises a threshold condition and an application rule corresponding to the threshold condition; and
a processing unit, configured to determine a target transmission path from at least two transmission paths based on the steering information, wherein the at least two transmission paths comprise a first transmission path using a first access technology and a second transmission path using a second access technology.

15. The apparatus according to claim 14, wherein the application rule comprises:
attribute information corresponding to the threshold condition, wherein the attribute information comprises a mandatory condition or an optional condition, and the attribute information indicates that the threshold condition is a mandatory condition or an optional condition.

16. The apparatus according to claim 15, wherein the processing unit is specifically configured to: if the attribute information is an optional condition, determine that the first transmission path does not meet the threshold condition and that the second transmission path meets the threshold condition; and
reduce a steering proportion of data in the first transmission path, and increase a steering proportion of data in the second transmission path.

17. The apparatus according to claim 15, wherein the processing unit is specifically configured to: if the attribute information is a mandatory condition, determine that the first transmission path does not meet the threshold condition and that the second transmission path meets the threshold condition; and
determine the second transmission path as the target transmission path.

18. The apparatus according to any one of claims 14 to 17, wherein the application rule comprises priority information corresponding to the threshold condition, and the priority information indicates a priority of the threshold condition.

19. The apparatus according to claim 18, wherein the target transmission path comprises the first transmission path; and
a priority of a threshold condition met by the first transmission path is higher than a priority of a threshold condition met by the second transmission path.

20. The apparatus according to any one of claims 14 to 19, wherein the application rule comprises level information corresponding to the threshold condition.

21. The apparatus according to claim 20, wherein the threshold condition comprises a first threshold condition and a second threshold condition, and the application rule comprises a first level corresponding to the first threshold condition and a second level corresponding to the second threshold condition; and
the processing unit is specifically configured to:
determine that the first transmission path meets the first threshold condition, and determine that the second transmission path meets the second threshold condition; and
determine the steering proportion of the first transmission path and the steering proportion of the second transmission path based on the first level and the second level.

22. The apparatus according to any one of claims 14 to 21, wherein the threshold condition comprises a plurality of threshold conditions, and the application rule comprises determining the target transmission path based on a quantity of the plurality of threshold conditions met by the first transmission path and the second transmission path.

23. The apparatus according to claim 14, wherein the processing unit is specifically configured to:
determine that neither of the first transmission path and the second transmission path meets the threshold condition; and
determine a default transmission path as the target transmission path, wherein the default transmission path is at least one of the first transmission path and the second transmission path.

24. The apparatus according to claim 23, wherein the application rule corresponding to the threshold condition comprises: when neither of the first transmission path and the second transmission path meets the threshold condition, determine the default transmission path as the target transmission path.

25. The apparatus according to claim 22 or 24, wherein the default path is sent by a core network element, or the default path is configured by a terminal device or a user plane network element.

26. The apparatus according to any one of claims 14 to 25, wherein the communication unit is specifically configured to:
obtain an access traffic steering, switching, and splitting ATSSS rule, wherein the ATSSS rule comprises the steering information; or
obtain an N4 rule, wherein the N4 rule comprises the steering information.

27. A readable storage medium, comprising a computer program or instructions, wherein when the computer program or the instructions are executed, a computer is enabled to perform the method according to any one of claims 1 to 13.

28. A computer program product, comprising computer-readable instructions, wherein when a communication apparatus reads and executes the computer-readable instructions, the communication apparatus is enabled to perform the method according to any one of claims 1 to 13.

29. A communication system, comprising:
a user plane network element, configured to perform the method according to any one of claims 1 to 13; and
a control plane network element, configured to send steering information to the user plane network element, wherein the steering information comprises a threshold condition and an application rule corresponding to the threshold condition.

30. A communication system, wherein
a control plane network element sends steering information to a user plane network element, wherein the steering information comprises a threshold condition and an application rule corresponding to the threshold condition; and
the user plane network element determines a target transmission path from at least two transmission paths based on the steering information, wherein the at least two transmission paths comprise a first transmission path using a first access technology and a second transmission path using a second access technology.
